# EUROPEAN PATENT SPECIFICATION

(11) **EP 4 588 720 B1**
(45) Date of publication and mention of the grant of the patent: **03.06.2026**
(21) Application number: 23865330.7
(22) Date of filing: 01.09.2023
(51) Int. Cl.: B60Q 1/14

(54) **VEHICLE HEADLIGHT**
SCHEINWERFER FÜR FAHRZEUGE
FEU AVANT DE VÉHICULE

(30) Priority: 14.09.2022 JP 2022146156
(43) Date of publication of application: 23.07.2025
(73) Proprietor: Koito Manufacturing Co., Ltd., Shinagawa-ku, Tokyo 141-0001 (JP)
(72) Inventor: YAMAMOTO Hiroki, Shizuoka-shi, Shizuoka 424-8764 (JP)
(74) Representative: Hoffmann Eitle
(86) International application number: PCT/JP2023/032108
(87) International publication number: WO 2024/057975

(56) References cited:
- EP-A1- 3 696 019
- EP-B1- 3 246 204
- WO-A1-2022/172860
- WO-A1-2022/172860
- JP-A- 2011 031 807
- JP-A- 2016 159 709
- US-A1- 2017 182 931
- US-A1- 2017 182 931

## Description

### Technical Field

The present invention relates to a vehicle headlight.

### Background Art

There is known a vehicle headlight that forms an Adaptive Driving Beam (ADB) light distribution pattern for which a region overlapping another vehicle located in front of an own vehicle is a non-irradiation region. Following Patent Literature 1 discloses such a vehicle headlight.

Generally, a non-irradiation region of an ADB light distribution pattern is changed according to a position of another vehicle with respect to an own vehicle. The position in a left-right direction of the another vehicle in the field of view of a driver of the own vehicle can be expressed by an angle formed by a traveling direction of the own vehicle and a direction from the own vehicle toward the another vehicle. This angle becomes larger as a distance between the own vehicle and the another vehicle is shorter even when a shift amount in the left-right direction of the another vehicle with respect to the own vehicle is the same. Furthermore, this angle with respect to a change amount of this distance is larger as this distance is shorter. Therefore, as the distance between the own vehicle and the another vehicle is shorter, the another vehicle moves toward one side in the left-right direction in the field of view of the driver of the own vehicle, and, as the distance between the own vehicle and the another vehicle is shorter, a moving speed is faster.

Hence, when the distance between the own vehicle and the another vehicle becomes short, the another vehicle more readily deviates from a non-irradiation region. In following Patent Literature 1, an irradiation region of the ADB light distribution pattern includes a transition region whose luminance becomes lower toward the non-irradiation region along a boundary between the irradiation region and the non-irradiation region. Change of a luminance in this transition region is more moderate as the distance between the own vehicle and the another vehicle is shorter, and the width of the transition region becomes wider. Hence, according to following Patent Literature 1, when the distance between the own vehicle and the another vehicle is short, even if the own vehicle deviates from the non-irradiation region and enters the irradiation region, the width of the transition region is wide, so that it is possible to suppress an increase in the amount of light radiated to the another vehicle and suppress glare to be given to the driver of the another vehicle.

[Patent Literature 1] WO 2019/073994 A1
EP 3 696 019 A1 discloses features falling under the preamble of claim 1. EP 3 246 204 B1 and WO 2022/172860 A1 are further prior art.

### Summary of Invention

Generally, in the field of view of a driver of an own vehicle, an object located at a position shifted from the front of the own vehicle to the left-right direction readily moves in the left-right direction, and an object located in front of the own vehicle has difficulty in moving in the left-right direction. According to above Patent Literature 1, such change of movement of the object matching the position in the left-right direction is not taken into account.

Consequently, an object of the present invention is to provide a vehicle headlight that can improve visibility in front while suppressing glare from being given.

The invention is defined by claim 1.

In order to achieve the above object, a vehicle headlight according to the present invention includes: a lighting unit that can change a light distribution pattern of light to be emitted; and a control unit that receives input of a signal from a target detection device that detects a predetermined target located in front of an own vehicle and controls the lighting unit, the control unit forms in the light distribution pattern a first region that overlaps at least part of the predetermined target and whose light amount has been reduced, and lateral blurred regions that lie along at least part of left and right edges of the first region and whose light amounts have been reduced, luminances of the lateral blurred regions are higher than a luminance of the first region, and increase from a side of the first region toward a side opposite to the first region, and widths of the lateral blurred regions located in a center region in which a distance from a vertical line passing a center in a left-right direction of the own vehicle is less than a predetermined distance are narrower than widths of the lateral blurred regions located in an outer region in which the distance is the predetermined distance or more.

The lateral blurred regions located in the center region in which the distance is less than the predetermined distance are provided for a predetermined target located in front of the own vehicle, and the predetermined target is, for example, a preceding vehicle, an oncoming vehicle far from the own vehicle, a human on a sidewalk far from the own vehicle, or the like. An angle formed by a direction from the own vehicle toward such a predetermined target and a traveling direction of the own vehicle is small, and therefore the predetermined target has difficulty in moving in the left-right direction in the field of view of the driver of the own vehicle. Furthermore, the lateral blurred regions located in the outer region in which the distance is the predetermined distance or more are provided for the predetermined target located at a position shifted from the front of the own vehicle to the left-right direction, and the predetermined target is, for example, an oncoming vehicle close to the own vehicle, a human on a sidewalk close to the own vehicle, or the like. The angle formed by the direction from the own vehicle toward such a predetermined target and the traveling direction of the own vehicle is large, so that the predetermined target has easiness in moving in the left-right direction in the field of view of the driver of the own vehicle. In this vehicle headlight, the widths of the lateral blurred regions located in the center region are narrower than the widths of the lateral blurred regions located in the outer region. Consequently, according to this vehicle headlight, it is possible to make the widths of the lateral blurred regions provided for the predetermined target that has difficulty in moving in the left-right direction narrower than the widths of the lateral blurred regions provided for the predetermined target that has easiness in moving in the left-right direction. Consequently, according to this vehicle headlight, it is possible to suppress glare from being given as compared with a case where the widths of the lateral blurred regions do not change according to the positions in the left-right direction of the lateral blurred regions. Furthermore, according to this vehicle headlight, the widths of the lateral blurred regions located in the center region can be narrowed as compared with the above case, so that it is possible to improve visibility of the center region in front.

The widths of the lateral blurred regions located in the center region may be constant. Furthermore, the widths of the lateral blurred regions located in the center region may be zero.

By employing such a configuration, it is possible to reduce a control load of the control unit.

The widths of the lateral blurred regions located in the center region may be narrower as the distance is shorter.

As the distance from the predetermined target to the vertical line is shorter, the predetermined target has difficulty in moving in the left-right direction. Consequently, by employing such a configuration, it is possible to improve the visibility of the center region in front while suppressing glare from being given as compared with a case where the widths of the lateral blurred regions located in the center region are constant.

The widths of the lateral blurred regions located in the outer region may be constant.

By employing such a configuration, it is possible to reduce a control load of the control unit.

The widths of the lateral blurred regions located in the outer region may be wider as the distance is longer.

The predetermined target has easiness in moving in the left-right direction as the distance from the predetermined target to the vertical line is longer. Consequently, by employing such a configuration, it is possible to improve the visibility of the outer region in front while suppressing glare from being given as compared with a case where the widths of the lateral blurred regions located in the outer region are constant.

The predetermined distance may be a distance from the vertical line to a center line that divides a driving lane of the own vehicle and a driving lane of an oncoming vehicle.

By employing such a configuration, it is possible to more reliably make, for example, the widths of the lateral blurred regions provided for a preceding vehicle narrower than the widths of the lateral blurred regions provided for the oncoming vehicle.

As described above, according to the present invention, it is possible to provide a vehicle headlight that can improve the visibility in front while suppressing glare from being given.

### Brief Description of Drawings

[FIG. 1] FIG. 1 is a schematic view illustrating a vehicle including a vehicle headlight.
[FIG. 2] FIG. 2 is a cross-sectional view schematically illustrating a light unit.
[FIG. 3] FIG. 3 is a front view schematically illustrating a light source unit illustrated in FIG. 2.
[FIG. 4] FIG. 4 is a control flowchart of a control unit according to the present embodiment.
[FIG. 5] FIG. 5 is a view illustrating an example of a light distribution pattern of a high beam according to the present embodiment.
[FIG. 6] FIG. 6 is a view illustrating an example of an ADB light distribution pattern according to the present embodiment similarly to FIG. 5.
[FIG. 7] FIG. 7 is a view illustrating a relationship between a distance from a vertical line and a width of a lateral blurred region according to the present embodiment.
[FIG. 8] FIG. 8 is a view illustrating a luminance distribution of part of the ADB light distribution pattern illustrated in FIG. 6.
[FIG. 9] FIG. 9 is a view illustrating a luminance distribution of another part of the ADB light distribution pattern illustrated in FIG. 6.
[FIG. 10] FIG. 10 is a view illustrating the relationship between the distance from the vertical line and the width of the lateral blurred region according to a modification.
[FIG. 11] FIG. 11 is a view illustrating the relationship between the distance from the vertical line and the width of the lateral blurred region according to another modification. Description of Embodiments

Hereinafter, a preferred embodiment of a vehicle headlight according to the present invention will be described in detail with reference to the drawings. The embodiment exemplified below is intended to facilitate understanding of the present invention and is not intended to interpret the present invention in a limited manner. Furthermore, in the present invention, components in the embodiment exemplified below may be appropriately combined, as long as the combination falls under the scope of the appended claims. Note that, dimensions of each member may be changed in the drawings to be referred to below to facilitate understanding. Furthermore, only part of similar components will be assigned reference numerals, and part of reference numerals may be omitted in the drawings for the sake of clarity.

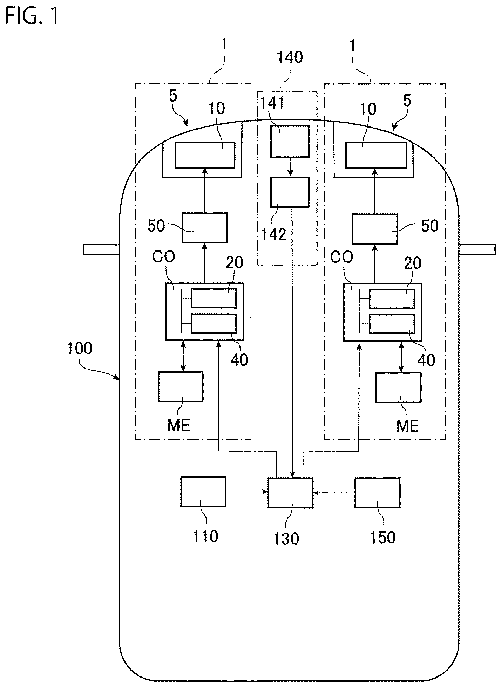

FIG. 1 is a schematic view illustrating an own vehicle including a vehicle headlight according to the present embodiment. As illustrated in FIG. 1, an own vehicle 100 includes a pair of left and right vehicle headlights 1, a light switch 110, a target detection device 140, and an Electronic Control Unit (ECU) 130. In this description, "right" means a right side in a forward direction of the own vehicle 100, "left" means a left side in the forward direction, and the driver means a driver of the own vehicle 100. The own vehicle 100 according to the present embodiment is a car.

Each vehicle headlight 1 includes a light unit 5, a memory ME, a control unit CO, and a power supply circuit 50. Generally, the light unit 5 of the one vehicle headlight 1 is disposed on the left side of a front part of the own vehicle 100, and the light unit 5 of the other vehicle headlight 1 is disposed on the right side of the front part. The configuration of the one vehicle headlight 1 is the same as the configuration of the other vehicle headlight 1 except that the shape of the light unit 5 is substantially symmetrical. Hence, hereinafter, the one vehicle headlight 1 will be described, and description of the other vehicle headlight 1 will be omitted.

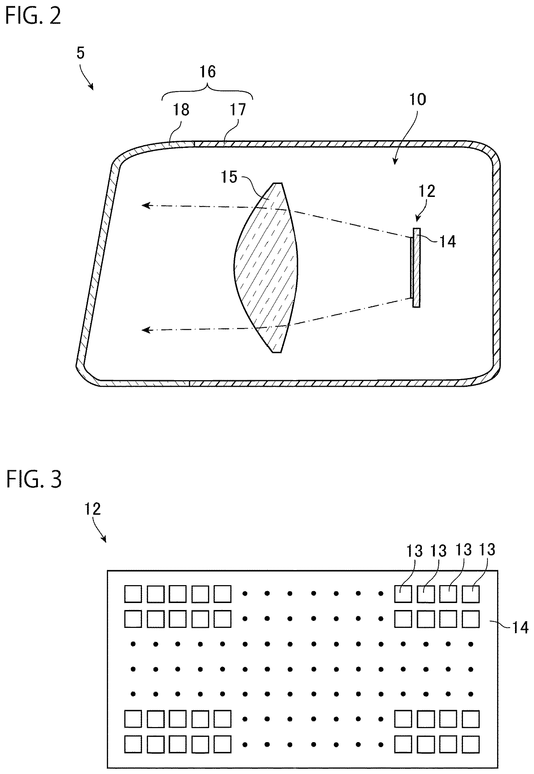

FIG. 2 is a cross-sectional view schematically illustrating the light unit 5. The light unit 5 includes a housing 16 and a lighting unit 10.

The housing 16 includes a housing 17 and an outer cover 18. The housing 17 is formed in a box shape having an opening in front, and the outer cover 18 is fixed to the housing 17 so as to close the opening. In this way, an accommodation space surrounded by the housing 17 and the outer cover 18 is formed in the housing 16, and the lighting unit 10 is accommodated in this accommodation space. The outer cover 18 allows light emitted from the lighting unit 10 to transmit therethrough. The power supply circuit 50, the control unit CO, and the memory ME are disposed outside the housing 16, yet may be disposed in an accommodation space of the housing 16.

The lighting unit 10 can change a light distribution pattern of the light to be emitted. The light distribution pattern means both of a shape of an image of light formed on a virtual vertical screen that is, for example, 25 m ahead of the own vehicle 100, and an intensity distribution of the light in the image. The lighting unit 10 includes a light source unit 12 that emits light forward, and a projection lens 15 that is disposed in front of the light source unit 12.

The projection lens 15 adjusts a divergence angle of the light that has entered the projection lens 15 from the light source unit 12. The light whose divergence angle has been adjusted by the projection lens 15 is radiated from the outer cover 18 to the front of the own vehicle 100.

FIG. 3 is a front view schematically illustrating the light source unit 12 illustrated in FIG. 2. The light source unit 12 according to the present embodiment includes a plurality of light emitting elements 13 that are light emitting units that emit light forward, and a circuit board 14 on which the plurality of light emitting elements 13 are mounted. Each light emitting element 13 is disposed in a matrix and aligned in an upper-lower direction and the left-right direction. According to the present embodiment, these light emitting elements 13 are micro Light Emitting Diodes (LEDs), and the light source unit 12 is a so-called micro LED array. Note that the number of the light emitting elements 13 aligned in each of the left-right direction and the upper-lower direction is not particularly limited. The light amount of light emitted from each light emitting element 13 can be individually changed by the control unit CO.

According to the present embodiment, each light emitting element 13 corresponds to a pixel of an image generated by an image generation unit of the control unit CO described later. The light source unit 12 adjusts the light amount of light emitted from each light emitting element 13 according to the data of the pixel associated with the light emitting element 13, and thereby emits light based on this image and forms a light distribution pattern based on this image using the light. According to the present embodiment, the light emitting element 13 and the pixel are associated with each other on a one-to-one basis, but are not particularly limited.

The memory ME illustrated in FIG. 1 is configured to be able to allow information to be recorded and allow the recorded information to be read. The memory ME is, for example, a non-transitory recording medium, and is preferably a semiconductor recording medium such as a Random Access Memory (RAM) or a Read Only Memory (ROM), but may include a recording medium of any format such as an optical recording medium or a magnetic recording medium. Note that the "non-transitory" recording medium includes all computer-readable recording media except for a transitory propagating signal, and does not exclude volatile recording media. Various programs for controlling the lighting unit 10 and information necessary for control are stored in this memory ME, and the control unit CO reads the programs and information stored in the memory ME. Note that the memory ME may be provided inside the control unit CO.

The control unit CO includes, for example, a microcontroller, an integrated circuit such as an Integrated Circuit (IC), a Large-Scale Integrated circuit (LSI), or an Application Specific Integrated Circuit (ASIC), or a Numerical Control (NC) device. Furthermore, in a case where the NC device is used, the control unit CO may use a machine learning device or may not use a machine learning device. The control unit CO is electrically connected to the ECU 130, and in each vehicle headlight 1, the control units CO are electrically connected to each other via the ECU 130. Note that the control units CO may be electrically directly connected to each other without the ECU 130.

The control unit CO according to the present embodiment includes an image generation unit 20 and a light distribution control unit 40 in a state where various programs are read from the memory ME, and receives input of a signal from the target detection device 140 via the ECU 130.

The image generation unit 20 generates an image based on the image stored in the memory ME. According to the present embodiment, this image is a grayscale image whose data of each pixel is a gray value, and a pixel having a larger gray value is brighter. However, data of each pixel is not particularly limited. Furthermore, information of the image may be read from a memory outside the vehicle via a wireless communication device included in the own vehicle 100.

The image stored in the memory ME according to the present embodiment is a low beam image in which the light emitted from the light source unit 12 forms a light distribution pattern of a low beam, or a high beam image in which the light forms the light distribution pattern of a high beam. The image generation unit 20 according to the present embodiment processes the high beam image based on the information indicated by the signal input from the target detection device 140, and generates an Adaptive Driving Beam (ADB) light distribution image. The ADB light distribution image is an image showing an ADB light distribution pattern in which a partial region in the light distribution pattern of the high beam becomes a first region whose light amount has been reduced, and a region along at least part of an edge of the first region becomes a blurred region whose the light amount is reduced and that is brighter than the first region.

The light distribution control unit 40 according to the present embodiment controls the lighting unit 10 by controlling the power supply circuit 50 based on one of information of the low beam image and information of the high beam image stored in the memory ME, and the information of the ADB light distribution image generated by the image generation unit 20. As described above, the image generation unit 20 generates an image based on the information indicated by the signal input from the target detection device 140. Hence, the control unit CO receives input of a signal from the target detection device 140, and controls the lighting unit 10 by the image generation unit 20 and the light distribution control unit 40.

The power supply circuit 50 includes a driver, and, when a control signal is input from the control unit CO, this driver adjusts electrical power supplied from an unillustrated power supply to each light emitting element 13 of the light source unit 12. In this way, the light amount of light emitted from each light emitting element 13 is adjusted, and the light source unit 12 emits light that is based on the low beam image, the high beam image, or the ADB light distribution image. Furthermore, light of a low beam, a high beam, or an ADB light distribution pattern is emitted from the lighting unit 10. Furthermore, according to the present embodiment, the driver of the power supply circuit 50 adjusts the electrical power to be supplied to each light emitting element 13 by Pulse Width Modulation (PWM) control to adjust the light amount of light emitted from each light emitting element 13. However, a method for adjusting the light amount of light emitted from each light emitting element 13 is not particularly limited.

The light switch 110 according to the present embodiment is a switch that selects emission or non-emission of light. Furthermore, the light switch 110 selects emission of a low beam or a high beam at a time of emission of light. The light switch 110 outputs a signal indicating emission of the selected light to the control unit CO via the ECU 130 of the own vehicle 100 in a case of ON, and does not output a signal in a case of OFF.

The target detection device 140 according to the present embodiment detects a predetermined target located in front of the own vehicle 100. Examples of the predetermined target include other vehicles such as preceding vehicles and oncoming vehicles, retroreflective objects, humans such as pedestrians, and the like. The retroreflective object according to the present embodiment is an object that does not emit light by itself and retroreflects radiated light at a predetermined spreading angle, and examples of such a retroreflective object include a road sign, a visual guide, and the like. The target detection device 140 according to the present embodiment includes an image acquisition unit 141 and a detection unit 142.

The image acquisition unit 141 acquires an image of the front of the own vehicle 100, and this image includes at least part of a region that can be irradiated with light emitted from the pair of vehicle headlights 1. Examples of the image acquisition unit 141 include a Charged Coupled Device (CCD) camera, a Complementary Metal Oxide Semiconductor (CMOS) camera, a Light Detection And Ranging (LiDAR), a millimeter wave radar, and the like. The image acquisition unit 141 outputs a signal related to the acquired image to the detection unit 142.

The detection unit 142 employs, for example, a configuration similar to that of the control unit CO. The detection unit 142 performs predetermined image processing on the image acquired by the image acquisition unit 141, and detects the presence of the predetermined target, a presence position of the target in the image, the type of the target, and the like from the image subjected to the image processing.

When detecting the predetermined target from the image, the detection unit 142 outputs a signal indicating information related to the target to the control unit CO via the ECU 130. The information related to the predetermined target includes the presence of the target, the presence position of the target in the image, the type of the target, and the like. Furthermore, when not detecting the predetermined target, the detection unit 142 outputs a signal indicating that the predetermined target is not present to the control unit CO via the ECU 130, yet may not output the signal.

Note that the predetermined target detected by the target detection device 140, the number of types of the targets, and the configuration of the target detection device 140 are not particularly limited. For example, the image acquisition unit 141 may be a CCD camera or a LiDAR, and, in this case, the detection unit 142 detects a predetermined target based on images acquired by the CCD camera and the LiDAR. Furthermore, a method for detecting the predetermined target by the detection unit 142 is not limited. When, for example, receiving from the image acquisition unit 141 input of information of an image in which a pair of white light spots and a pair of red light spots having luminances higher than a predetermined luminance are present at a predetermined interval in the left-right direction, the detection unit 142 detects the presence and the presence positions of other vehicles as the predetermined targets from the light spots. When, for example, receiving from the image acquisition unit 141 input of information of an image in which the above pair of white light spots are present, the detection unit 142 identifies the other vehicles as oncoming vehicles. Furthermore, when receiving from the image acquisition unit 141 input of the information of the image in which the above pair of red light spots are present, the detection unit 142 identifies the other vehicle as a preceding vehicle. For example, a pair of white light spots are headlights of an oncoming vehicle, and a pair of red light spots are tail lights of a preceding vehicle. Note that the target detection device 140 may not identify the types of the other vehicles.

Next, an operation of the vehicle headlight 1 according to the present embodiment will be described. According to the present embodiment, the operations of the pair of vehicle headlights 1 are the same and synchronized with each other. Hence, hereinafter, the operation of the one vehicle headlight 1 will be described, and description of the operation of the other vehicle headlight 1 will be omitted.

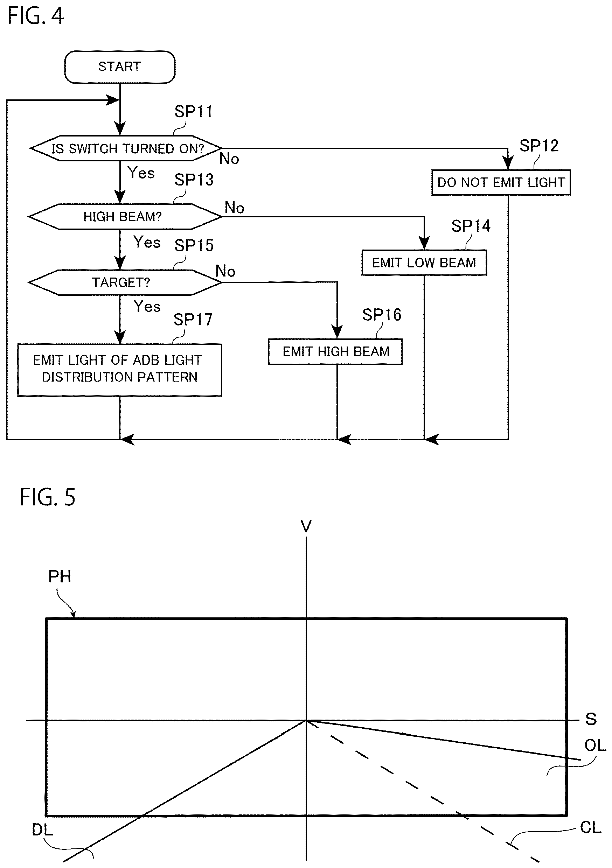

FIG. 4 is a control flowchart of the control unit CO according to the present embodiment. As illustrated in FIG. 4, the control flow includes step SP11 to step SP17. It is assumed that a signal is input to the control unit CO from the target detection device 140 in a start state illustrated in FIG. 4.

### (Step SP11)

In this step, the control unit CO advances the control flow to step SP12 when a signal is not input from the light switch 110, and advances the control flow to step SP13 when this signal is input.

### (Step SP12)

In this step, the light distribution control unit 40 in the control unit CO controls the power supply circuit 50 to configure the lighting unit 10 not to emit light. Thus, the vehicle headlight 1 does not emit light. Furthermore, the control unit CO returns the control flow to step SP11.

### (Step SP13)

In this step, when receiving from the light switch 110 input of the signal related to emission of the low beam, the control unit CO advances the control flow to step SP14. Furthermore, when receiving from the light switch 110 input of the signal related to emission of the high beam, the control unit CO advances the control flow to step SP15.

### (Step SP14)

In this step, the control unit CO controls the lighting unit 10 such that a low beam is emitted from the vehicle headlight 1. More specifically, the image generation unit 20 reads the low beam image stored in the memory ME, and the light distribution control unit 40 controls the power supply circuit 50 based on information of this low beam image to supply electrical power to each light emitting element 13 of the light source unit 12. When this electrical power is supplied, light is emitted from part of the light emitting elements 13 at a time of emission of the low beam, the light source unit 12 emits the light based on the low beam image, and light having a light distribution pattern of a low beam is emitted from the vehicle headlight 1. In this way, the low beam is emitted from the vehicle headlight 1. When the low beam is emitted from the vehicle headlight 1, the control unit CO returns the control flow to step SP11.

### (Step SP15)

In this step, the control unit CO advances the control flow to step SP16 when receiving from the target detection device 140 input of a signal indicating that the predetermined target is not present, and advances the control flow to step SP17 when receiving from the target detection device 140 input of a signal indicating information related to the predetermined target.

### (Step SP16)

In this step, the control unit CO controls the lighting unit 10 such that the vehicle headlight 1 emits a high beam. More specifically, the image generation unit 20 reads a high beam image stored in the memory ME, and the light distribution control unit 40 controls the power supply circuit 50 based on information of this high beam image to supply electrical power to each light emitting element 13 of the light source unit 12. When this electrical power is supplied, the light source unit 12 emits light that is based on the high beam image, and light having a light distribution pattern of the high beam is emitted from the vehicle headlight 1. In this way, when the predetermined target is not located in front of the own vehicle 100, the vehicle headlight 1 emits the high beam.

FIG. 5 is a view illustrating an example of a light distribution pattern of a high beam according to the present embodiment. In FIG. 5, S represents a horizontal line, V represents a vertical line passing the center in the left-right direction of the own vehicle 100, and a light distribution pattern PH of a high beam formed on a virtual vertical screen that is arranged 25 m ahead of the own vehicle 100 is indicated by a thick line. According to the present embodiment, as illustrated in FIG. 5, a driving lane OL of an oncoming vehicle is located on the right side of a driving lane DL of the own vehicle 100, and the own vehicle 100 needs to keep to the left side. According to the present embodiment, when emitting a high beam, light is emitted from all of the light emitting elements 13, and the outer shape of the light distribution pattern PH of the high beam is substantially a horizontally long rectangular shape. When the high beam is emitted from the vehicle headlight 1, the control unit CO returns the control flow to step SP11.

### (Step SP17)

In this step, the control unit CO controls the lighting unit 10 such that the light distribution pattern of the light emitted from the vehicle headlight 1 becomes an ADB light distribution pattern matching the predetermined target. Hereinafter, a case where the predetermined target is another vehicle will be described as an example.

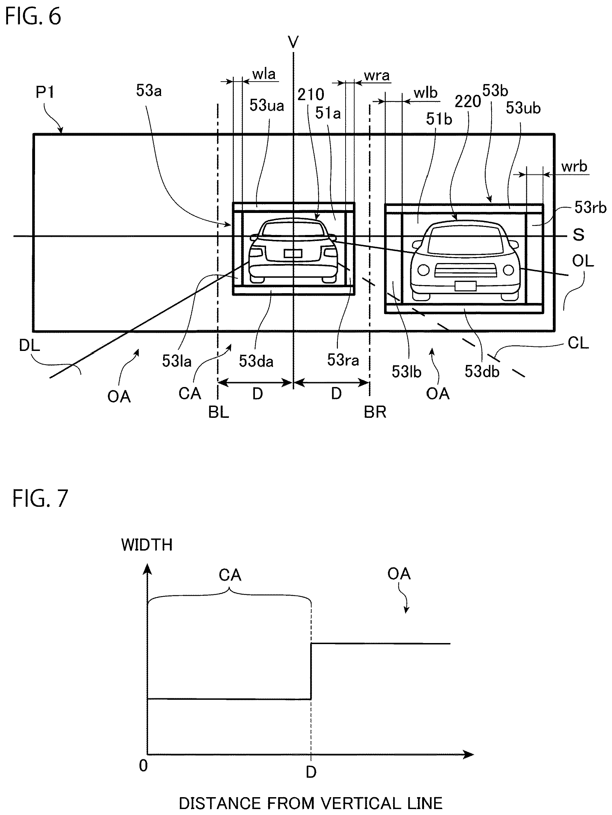

FIG. 6 is a view illustrating an example of the ADB light distribution pattern according to the present embodiment similarly to FIG. 5, and is a view illustrating an example of the ADB light distribution pattern in a case where a preceding vehicle and an oncoming vehicle that are predetermined targets are located in front of the own vehicle 100. An ADB light distribution pattern P1 is a light distribution pattern in which a first region and a blurred region are formed in the light distribution pattern PH of a high beam. That is, the control unit CO controls the lighting unit 10 such that the first region and the blurred region are formed in the light distribution pattern PH of the high beam. In FIG. 6, two first regions 51a and 51b and blurred regions 53a and 53b associated with the respective first regions 51a and 51b are formed.

The first region 51a is a region that overlaps at least part of a preceding vehicle 210 in the light distribution pattern PH of the high beam, and is darker as compared with a case where the preceding vehicle 210 is not located in front of the own vehicle 100. Furthermore, the first region 51b is a region that overlaps at least part of an oncoming vehicle 220 in the light distribution pattern PH of the high beam, and is darker as compared with a case where the oncoming vehicle 220 is not located in front of the own vehicle 100. That is, light amounts of the first regions 51a and 51b are smaller than light amounts of the regions associated with the first regions 51a and 51b in the light distribution pattern PH of the high beam. Consequently, the vehicle headlight 1 according to the present embodiment can reduce the amount of light radiated from the own vehicle 100 to the preceding vehicle 210 and the oncoming vehicle 220, and suppress glare from being given to drivers of the preceding vehicle 210 and the oncoming vehicle 220. Note that the first regions 51a and 51b according to the present embodiment are light shielding regions that are not irradiated with light, but are not limited thereto. In the example illustrated in FIG. 6, the first region 51a has a rectangular shape that overlaps the entire preceding vehicle 210, and the first region 51b has a rectangular shape that overlaps the entire oncoming vehicle 220. However, from a viewpoint of suppressing glare to the drivers of the preceding vehicle 210 and the oncoming vehicle 220, the first regions 51a and 51b may overlap at least part of visual recognition parts for the drivers of the preceding vehicle 210 and the oncoming vehicle 220 to visually recognize the outside of the vehicles. Note that the visual recognition part is, for example, a side mirror, a rear window, an imaging device that images the rear of the vehicle, or the like in a case of the preceding vehicle 210, and is, for example, a front window in a case of the oncoming vehicle 220. These visual recognition parts generally tend to be disposed above a license plate.

The blurred region 53a is a region that lies along at least part of the edge of the first region 51a in the light distribution pattern PH of the high beam, is darker as compared with a case where the preceding vehicle 210 is not located in front of the own vehicle 100, and is brighter than the first region 51a. The blurred region 53b is a region that lies along at least part of the edge of the first region 51b in the light distribution pattern PH of the high beam, is darker as compared with a case where the oncoming vehicle 220 is not located in front of the own vehicle 100, and is brighter than the first region 51b. That is, the light amounts of the blurred regions 53a and 53b are smaller than the light amounts of the regions associated with the blurred regions 53a and 53b in the light distribution pattern PH of the high beam. The blurred regions 53a and 53b according to the present embodiment include pairs of the lateral blurred regions 53ra, 53la, 53rb, and 53lb that lie along the left and right edges of the first regions 51a and 51b, respectively, upper blurred regions 53ua and 53ub that lie along the upper edges of the first regions 51a and 51b, and lower blurred regions 53da and 53db that lie along the lower edges of the first regions 51a and 51b.

FIG. 6 illustrates an example where the lateral blurred regions 53ra, 53la, 53rb, and 53lb, the upper blurred regions 53ua and 53ub, and the lower blurred regions 53da and 53db form the blurred regions 53a and 53b surrounding the entire circumferences of the first regions 51a and 51b. However, the blurred regions 53a and 53b may include the pairs of the lateral blurred regions 53ra, 53la, 53rb, and 53lb. Furthermore, each of the lateral blurred regions 53ra and 53la may lie along at least part of the left and right edges of the first region 51a, and each of the lateral blurred regions 53rb and 53lb may lie along at least part of the left and right edges of the first region 51b.

Furthermore, according to the present embodiment, widths wra and wla of the lateral blurred regions 53ra and 53la in a direction perpendicular to a direction in which the lateral blurred regions 53ra and 53la lie along the edge of the first region 51a are constant in a direction in which the lateral blurred regions 53ra and 53la lie along the edge of the first region 51a. Furthermore, widths wrb and wlb of the lateral blurred regions 53rb and 53lb in a direction perpendicular to a direction in which the lateral blurred regions 53rb and 53lb lie along the edge of the first region 51b are constant in the direction in which the lateral blurred regions 53rb and 53lb lie along the edge of the first region 51a. Note that, hereinafter, these widths will be simply referred to as the widths of the lateral blurred regions.

The widths wra, wla, wrb, and wlb of these lateral blurred regions 53ra, 53la, 53rb, and 53lb change according to the positions in the left-right direction of the lateral blurred regions 53ra, 53la, 53rb, and 53lb. More specifically, the widths of the lateral blurred regions located in a center region CA in which a distance from the vertical line V passing the center in the left-right direction of the own vehicle 100 is less than a predetermined distance D are narrower than the widths of the lateral blurred regions located in an outer region OA in which this distance is the predetermined distance D or more.

FIG. 7 is a view illustrating a relationship between the distance from the vertical line V and the width of the lateral blurred region according to the present embodiment. As illustrated in FIG. 7, according to the present embodiment, the widths of the lateral blurred regions located in the center region CA are a constant first predetermined width, and the widths of the lateral blurred regions located in the outer region OA are a constant second predetermined width wider than the first predetermined width. FIG. 6 illustrates boundary lines BR and BL indicating positions at which the distance from the vertical line V is the predetermined distance D. These boundary lines BR and BL are virtual lines drawn on a virtual vertical screen arranged 25 m ahead of the own vehicle 100. The predetermined distance D according to the present embodiment is such a distance that the driving lane DL of the own vehicle 100 is located between the boundary lines BR and BL, and is, for example, approximately 1.8 m, and an angle formed by a traveling direction of the own vehicle 100 and each of directions from the own vehicle 100 toward the boundary lines BR and BL is, for example, approximately 4°. Furthermore, in the example illustrated in FIG. 6, the lateral blurred regions 53ra and 53la are located in the center region CA, and the lateral blurred regions 53rb and 53lb are located in the outer region OA. Hence, the widths wra and wla are the first predetermined width, the widths wrb and wlb are the second predetermined width, and the widths wra and wla are narrower than the widths wrb and wlb. Note that it is assumed that the lateral blurred regions at least part of which are located in the center region CA are located in the center region CA.

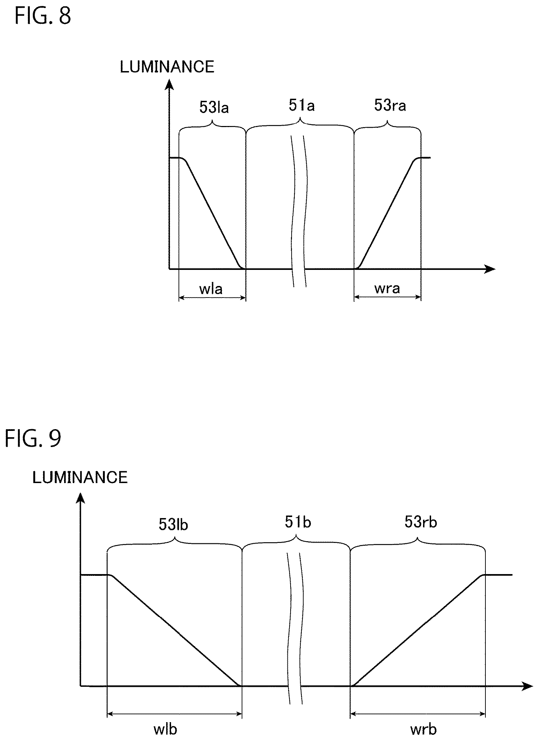

FIG. 8 is a view illustrating a luminance distribution of part of the ADB light distribution pattern P1 illustrated in FIG. 6, and is a view illustrating a luminance distribution on a horizontal line crossing the lateral blurred regions 53ra and 53la and the first region 51a in the left-right direction. As illustrated in FIG. 8, the luminances of the lateral blurred regions 53ra and 53la are higher than the luminance of the first region 51a, and increase from the first region 51a side toward the side opposite to the first region 51a. For this reason, the left and right edges of the first region 51a become inconspicuous, and become difficult for the driver to visually recognize. Accordingly, the driver is prevented from feeling uncomfortable from change in brightness between the first region 51a and the surroundings of the first region 51a. According to the present embodiment, luminance gradients of the lateral blurred regions 53ra and 53la are constant except for the end part of the first region 51a and the end part opposite to the first region 51a in the lateral blurred regions 53ra and 53la. The width of the range in which these luminance gradients are constant is preferably 1/2 or more of the widths wra and wla of the lateral blurred regions 53ra and 53la. Furthermore, the luminance gradients of the lateral blurred regions 53ra and 53la at the end part of the first region 51a increase apart from the first region 51a, and the luminance gradients of the lateral blurred regions 53ra and 53la at the end part on the side opposite to the first region 51a decrease apart from the first region 51a.

FIG. 9 is a view illustrating a luminance distribution of another part of the ADB light distribution pattern P1 illustrated in FIG. 6, and is a view illustrating a luminance distribution on a horizontal line crossing the lateral blurred regions 53rb and 53lb and the first region 51b in the left-right direction. As illustrated in FIG. 9, the luminances of the lateral blurred regions 53rb and 53lb are higher than the luminance of the first region 51b, and increase from the first region 51b side toward the side opposite to the first region 51b. Consequently, similarly to the first region 51a, the driver is prevented from feeling uncomfortable from the change in brightness between first region 51b and the surroundings of the first region 51b. According to the present embodiment, similarly to the lateral blurred regions 53ra and 53la, the luminance gradients of the lateral blurred regions 53rb and 53lb are constant except for the end part of the first region 51b and the end part on the side opposite to the first region 51b in the lateral blurred regions 53rb and 53lb. The width of the range in which these luminance gradients are constant is preferably 1/2 or more of the widths wrb and wlb of the lateral blurred regions 53rb and 53lb. Furthermore, the luminance gradients of the lateral blurred regions 53rb and 53lb at the end part of the first region 51b increase apart from the first region 51b, and the luminance gradients of the lateral blurred regions 53rb and 53lb at the end part on the side opposite to the first region 51b decrease apart from the first region 51b.

Note that the luminances of the lateral blurred regions 53ra and 53la only need to be higher than the luminance of the first region 51a and increase from the first region 51a side toward the side opposite to the first region 51a, and the luminances of the lateral blurred regions 53rb and 53lb only need to be higher than the luminance of the first region 51b and increase from the first region 51b side toward the side opposite to the first region 51b. For example, the luminance gradients may be constant in all of the lateral blurred regions 53ra, 53la, 53rb, and 53lb. Furthermore, the luminance gradients of the lateral blurred regions 53ra, 53la, 53rb, and 53lb may increase from the first regions 51a and 51b side toward the side opposite to the first regions 51a and 51b, and then decrease from the first regions 51a and 51b side toward the side opposite to the first regions 51a and 51b.

According to the present embodiment, the widths of the upper blurred regions 53ua and 53ub in a direction perpendicular to a direction in which the upper blurred regions 53ua and 53ub lie along the edges of the first regions 51a and 51b are constant in a direction in which the upper blurred regions 53ua and 53ub lie along the edges of the first regions 51a and 51b. Furthermore, the widths of the lower blurred regions 53da and 53db in a direction perpendicular to a direction in which the lower blurred regions 53da and 53db lie along the edges of the first regions 51a and 51b are constant in a direction in which the lower blurred regions 53da and 53db lie along the edges of the first regions 51a and 51b. Hereinafter, these widths will be simply referred to as the widths of the upper blurred regions and the widths of the lower blurred regions. According to the present embodiment, the widths of the upper blurred regions 53ua and 53ub and the lower blurred regions 53da and 53db are mutually the same predetermined width, and are the same as the afore-mentioned first predetermined width.

Furthermore, although description made with reference to the drawings will be omitted, the luminances of the upper blurred regions 53ua and 53ub are higher than the luminances of the first regions 51a and 51b, and increase from the first regions 51a and 51b side toward the side opposite to the first regions 51a and 51b. Furthermore, the luminances of the lower blurred regions 53da and 53db are higher than the luminances of the first regions 51a and 51b, and increase from the first regions 51a and 51b side toward the side opposite to the first regions 51a and 51b. According to the present embodiment, similarly to the lateral blurred regions 53ra, 53la, 53rb, and 53lb, except for the end parts of the first regions 51a and 51b and the end parts on the side opposite to the first regions 51a and 51b in the upper blurred regions 53ua and 53ub and the lower blurred regions 53da and 53db, the luminance gradients of the upper blurred regions 53ua and 53ub and the lower blurred regions 53da and 53db are constant. Furthermore, the luminance gradients of the upper blurred regions 53ua and 53ub and the lower blurred regions 53da and 53db at the end parts of the first regions 51a and 51b increase apart from the first regions 51a and 51b. Furthermore, the luminance gradients of the upper blurred regions 53ua and 53ub and the lower blurred regions 53da and 53db at the end parts on the side opposite to the first regions 51a and 51b decrease apart from the first regions 51a and 51b. Note that the luminance gradients of the upper blurred regions 53ua and 53ub and the lower blurred regions 53da and 53db are not limited, and, for example, the luminance gradients may be constant as a whole.

According to the present embodiment, at a time of control of light of the ADB light distribution pattern P1, the image generation unit 20 first reads a high beam image stored in the memory ME. Next, the image generation unit 20 processes the high beam image based on information input from the target detection device 140 and related to the preceding vehicle 210 and the oncoming vehicle 220 that are predetermined targets, and generates the ADB light distribution image showing the above ADB light distribution pattern P1. The processing performed on the high beam image by the image generation unit 20 is processing of making the regions associated with the first regions 51a and 51b in the high beam image the first regions 51a and 51b, and making the regions associated with the blurred regions 53a and 53b the blurred regions 53a and 53b. The image generation unit 20 processes the high beam image in this way and generates the ADB light distribution image. Next, the light distribution control unit 40 controls the power supply circuit 50 based on information of the generated ADB light distribution image, and causes the light source unit 12 to emit light that is based on the ADB light distribution image. Consequently, the light of the ADB light distribution pattern P1 is emitted from the vehicle headlight 1. Furthermore, the control unit CO returns the control flow to step SP11.

In this way, when emission of the high beam is selected by the light switch 110 in the vehicle headlight 1 according to the present embodiment, the light distribution pattern of the emitted light changes according to the preceding vehicle 210 or the oncoming vehicle 220 that are the predetermined targets.

As described above, in the vehicle headlight 1 according to the present embodiment, the control unit CO forms the first regions 51a and 51b and the lateral blurred regions 53ra, 53la, 53rb, and 53lb in the light distribution pattern PH of the high beam. As illustrated in FIG. 6, the first region 51a is a region that overlaps at least part of the preceding vehicle 210 as the predetermined target in the light distribution pattern PH of the high beam and whose light amount has been reduced, and the first region 51b is a region that overlaps at least part of the oncoming vehicle 220 as the predetermined target in the light distribution pattern PH of the high beam and whose light amount has been reduced. The lateral blurred region 53ra is a region that lies along at least part of the right edge of the first region 51a and whose light amount has been reduced, and the lateral blurred region 53la is a region that lies along at least part of the left edge of the first region 51a and whose light amount has been reduced. The lateral blurred region 53rb is a region that lies along at least part of the right edge of the first region 51b and whose light amount has been reduced, and the lateral blurred region 53lb is a region that lies along at least part of the left edge of the first region 51b and whose light amount has been reduced. As illustrated in FIG. 8, the luminances of the lateral blurred regions 53ra and 53la are higher than the luminance of the first region 51a, and increases from the first region 51a side toward the side opposite to the first region 51a, and, as illustrated in FIG. 9, the luminances of the lateral blurred regions 53rb and 53lb are higher than the luminance of the first region 51b, and increase from the first region 51b side toward the side opposite to the first region 51b.

The lateral blurred regions located in the center region CA in which the distance from the vertical line V passing the center in the left-right direction of the own vehicle 100 is less than the predetermined distance D are provided for the predetermined target located in front of the own vehicle 100, and the predetermined target is, for example, a preceding vehicle, an oncoming vehicle far from the own vehicle, a human on a sidewalk far from the own vehicle, or the like. An angle formed by a direction from the own vehicle 100 toward such a predetermined target and the traveling direction of the own vehicle 100 is small, and therefore the predetermined target has difficulty in moving in the left-right direction in the field of view of the driver of the own vehicle 100. Furthermore, the lateral blurred regions located in the outer region in which the above distance is the predetermined distance D or more are provided for the predetermined target located at a position shifted from the front of the own vehicle 100 to the left-right direction, and the predetermined target is, for example, an oncoming vehicle close to the own vehicle, a human on a sidewalk close to the own vehicle, or the like. The angle formed by the direction from the own vehicle 100 toward such the predetermined target and the traveling direction of the own vehicle 100 is large, so that the predetermined target has easiness in moving in the left-right direction in the field of view of the driver of the own vehicle 100. As illustrated in FIGS. 6 and 7, in the vehicle headlight 1 according to the present embodiment, the widths wra and wla of the lateral blurred regions 53ra and 53la located in the center region CA are narrower than the widths wra and wla of the lateral blurred regions 53rb and 53lb located in the outer region OA. Consequently, according to the vehicle headlight 1 according to the present embodiment, the widths wra and wla of regions 53ra and 53la provided for the preceding vehicle 210 that has difficulty in moving in the left-right direction and is the predetermined target can be made narrower than the widths wrb and wlb of the lateral blurred regions 53rb and 53lb provided for the oncoming vehicle 220 that has easiness in moving in the left-right direction and is close to the own vehicle 100 that is the predetermined target. Consequently, as compared with the case where the widths of the lateral blurred regions do not change according to the positions in the left-right direction of the lateral blurred regions, the vehicle headlight 1 according to the present embodiment can suppress glare from being given to the drivers of the preceding vehicle 210 and the oncoming vehicle 220. Furthermore, the vehicle headlight 1 according to the present embodiment can narrow the widths wra and wla of the lateral blurred regions 53ra and 53la located in the center region CA as compared with the above case, so that it is possible to improve the visibility of the center region CA in front.

Furthermore, according to the vehicle headlight 1 according to the present embodiment, the widths of the lateral blurred regions located in the center region CA are constant. Furthermore, according to the vehicle headlight 1 according to the present embodiment, the widths of the lateral blurred regions located in the outer region OA are constant. Consequently, the vehicle headlight 1 according to the present embodiment can reduce the control load of the control unit CO.

Note that, according to the present embodiment, the first region 51a overlaps at least part of the preceding vehicle 210 as the predetermined target, and the first region 51b overlaps at least part of the oncoming vehicle 220 as the predetermined target. However, in a case where, for example, the first region overlaps at least part of a human as a predetermined target, it is possible to reduce the amount of light radiated to the human and suppress glare with respect to the human. In this case, the first region preferably overlaps only the head of the human. Furthermore, similarly to the preceding vehicle 210 and the oncoming vehicle 220, as compared with a case where the widths of the lateral blurred regions do not change according to the positions in the left-right direction of the lateral blurred regions, it is possible to improve the visibility of the center region CA in front while suppressing glare from being given to a human. Furthermore, in a case where the first region overlaps at least part of a retroreflective object as a predetermined target, the amount of light radiated to the retroreflective object is reduced. Consequently, the amount of reflected light that is reflected by the retroreflective object and travels toward the own vehicle 100 is reduced, so that it is possible to suppress glare to the driver of the own vehicle 100 due to the reflected light. Furthermore, similarly to the preceding vehicle 210 and the oncoming vehicle 220, as compared with the case where the widths of the lateral blurred regions do not change according to the positions in the left-right direction of the lateral blurred regions, it is possible to improve the visibility of the center region CA in front while suppressing glare from being given to the driver of the own vehicle 100.

Although the present invention has been described citing the above embodiment as an example, the present invention is not limited thereto.

For example, the example has been described in the above embodiment where the first regions 51a and 51b and the lateral blurred regions 53ra, 53la, 53rb, and 53lb are formed in the light distribution pattern of the high beam. However, the light distribution pattern in which the first regions 51a and 51b and the lateral blurred regions 53ra, 53la, 53rb, and 53lb are formed is not limited. For example, the first regions 51a and 51b and the lateral blurred regions 53ra, 53la, 53rb, and 53lb may be formed in an added light distribution pattern that is added to a light distribution pattern of a low beam to form a light distribution pattern of a high beam. In this case, for example, the low beam is emitted from a lighting unit different from the lighting unit 10, and the lighting unit 10 emits light of the additional light distribution pattern.

Furthermore, in the above-described embodiment, the light source unit 12 including the plurality of light emitting elements 13 that can individually change the light amount of emitted light has been described as an example. However, the light source unit 12 is not limited. For example, the light source unit 12 may include a Digital Mirror Device (DMD) including a plurality of reflective elements aligned in a matrix, and a light emitting unit that irradiates the DMD with light. The DMD can adjust the light amount of light emitted from a reflective surface of each reflective element to a predetermined direction, and can convert the light emitted from each reflective element to the predetermined direction into light that is based on the image generated by the image generation unit 20. In this case, it can be understood that the reflective surface of each reflective element corresponds to a light emitting unit that can individually change the light amount of emitted light.

Furthermore, in the above embodiment, the control unit CO that includes the image generation unit 20 and controls the lighting unit 10 based on the ADB image generated by the image generation unit 20 has been described as an example. However, the control unit CO may not include the image generation unit 20. In this case, for example, information related to the ADB light distribution pattern matching a predetermined target may be stored in the memory ME in advance, and the control unit CO may control the lighting unit 10 based on the information.

Furthermore, the example has been described In the above embodiment where the widths wra and wla of the lateral blurred regions 53ra and 53la located in the center region CA are the first predetermined width, and the widths wrb and wlb of the lateral blurred regions 53rb and 53lb located in the outer region OA are the second predetermined width wider than the first predetermined width. However, the widths of the lateral blurred regions located in the center region CA may be narrower than the widths of the lateral blurred regions located in the outer region OA.

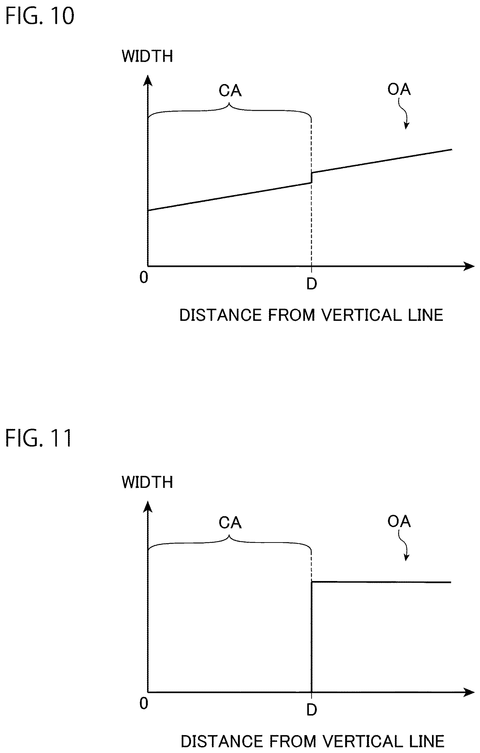

For example, as illustrated in FIG. 10, the widths of the lateral blurred regions located in the outer region OA may be wider as the distance is longer. Note that FIG. 10 is a view illustrating the relationship between the distance from the vertical line V and the widths of the lateral blurred regions according to the modification. The predetermined target located in front of the own vehicle 100 has easiness in moving in the left-right direction as the distance from the predetermined target to the vertical line V is longer. Consequently, by employing such a configuration, it is possible to improve the visibility of the outer region OA in front while suppressing glare from being given as compared with a case where the widths of the lateral blurred regions located in the outer region OA are constant. Note that, in the present modification, the widths of the lateral blurred regions become continuously wide, but may become wide stepwise.

Furthermore, as illustrated in FIG. 10, the widths of the lateral blurred regions located in center region CA may be narrower as the above distance is shorter. The predetermined target located in front of the own vehicle 100 has difficulty in moving in the left-right direction as the distance from the predetermined target to the vertical line V is shorter. Consequently, by employing such a configuration, it is possible to improve the visibility of the center region CA in front while suppressing glare from being given as compared with a case where the widths of the lateral blurred regions located in the center region CA are constant. Note that, in the present modification, the widths of the lateral blurred regions become continuously narrow, but may become narrow stepwise. Furthermore, a change rate of the widths of the lateral blurred regions with respect to the above distance may be the same or different between the lateral blurred regions located in the center region CA and the lateral blurred regions located in the outer region OA.

Furthermore, the widths of the lateral blurred regions located in the outer region OA may be constant, and the widths of the lateral blurred regions located in the center region CA may be narrower as the above distance is shorter. Furthermore, the widths of the lateral blurred regions located in the outer region OA may be wider as the above distance is longer, and the widths of the lateral blurred regions located in the center region CA may be constant.

As illustrated in FIG. 11, the widths of the lateral blurred regions located in center region CA may be zero. Note that FIG. 11 is a view illustrating a relationship between the distance from the vertical line V and the widths of the lateral blurred regions according to another modification. That is, when the distance from the vertical line V to the left and right edges of the first region is less than the predetermined distance D, the lateral blurred regions along the edges may not be formed, and, when the distance from the vertical line V to the left and right edges of the first region is the predetermined distance D or more, the lateral blurred regions along the edges may be formed. Furthermore, the widths of the lateral blurred regions may not be constant in the direction in which the lateral blurred regions lie along the edge of the first region.

Furthermore, the predetermined distance D is not limited. For example, the predetermined distance D may be a distance from the vertical line V to a center line CL that divides the driving lane DL of the own vehicle 100 and the driving lane OL of the oncoming vehicle 220. Note that the distance from this vertical line V to the center line CL is a distance on the virtual vertical screen arranged 25 m ahead. By employing such a configuration, it is possible to more reliably make, for example, the widths of the lateral blurred regions provided for the preceding vehicle 210 narrower than the widths of the lateral blurred regions provided for the oncoming vehicle 220 closer to the own vehicle 100. In this case, for example, the target detection device 140 is configured to be able to detect the center line CL, and the control unit CO controls the lighting unit 10 based on the information related to a target and information related to the center line CL.

Furthermore, the predetermined distance D may change according to the speed of the own vehicle 100. For example, the predetermined distance D at a time when the speed of the own vehicle 100 is less than the predetermined speed may be shorter than the predetermined distance D at a time when the speed of the own vehicle 100 is the predetermined speed or more. Generally, when the speed of the own vehicle 100 is high, a predetermined target has easiness in moving in the left-right direction in the field of view of a driver of an own vehicle. Consequently, by employing the above configuration, it is possible to more appropriately suppress glare from being given. Note that the predetermined distance D at a time when the speed of the own vehicle 100 is less than the predetermined speed may be shorter as the speed is slower, or may be constant. Furthermore, the predetermined distance D at a time when the speed of the own vehicle 100 is the predetermined speed or more may be longer as the speed is higher, or may be constant.

Furthermore, the predetermined distance D with respect to the lateral blurred region located on one side for which the vertical line V serves as a reference may be different from the predetermined distance D with respect to the lateral blurred region located on the other side for which the vertical line V serves as a reference. For example, the predetermined distance D with respect to the lateral blurred region located on a driving lane side of an oncoming vehicle for which the vertical line V serves as the reference may be longer than the predetermined distance D with respect to the lateral blurred region located on a side opposite to the driving lane side of an oncoming vehicle for which the vertical line V serves as the reference. The lateral blurred region located on the driving lane side of the oncoming vehicle is provided for the oncoming vehicle, for example, and the lateral blurred region located on the side opposite to the driving lane side of the oncoming vehicle is provided for a human on a sidewalk, for example. Furthermore, a relative speed of an own vehicle that is the predetermined target located on the driving lane side of the oncoming vehicle tends to be higher than a relative speed of the own vehicle that is the predetermined target located on the side opposite to the driving lane side of the oncoming vehicle. Consequently, the predetermined target located on the driving lane side of the oncoming vehicle tends to have easiness in moving in the left-right direction in the field of view of the driver of the own vehicle as compared with the predetermined target located on the side opposite to the driving lane side of the oncoming vehicle. Consequently, by employing the above configuration, it is possible to more appropriately suppress glare from being given.

Furthermore, the predetermined distance D may change depending on whether or not the driving lane DL of the own vehicle 100 is a straight lane or a curved lane. According to the invention, the predetermined distance D at a time when the own vehicle 100 is driving on the curved lane is longer than the predetermined distance D at a time when the own vehicle 100 is driving on a straight lane. Furthermore, as the curvature radius of the curved lane is smaller, the predetermined distance D may be made longer. As described above, when the predetermined distance D is changed depending on whether the driving lane DL of the own vehicle 100 is a straight lane or a curved lane, for example, the target detection device 140 is configured to be able to detect the curvature radius of the driving lane DL, and the control unit CO controls the lighting unit 10 based on information related to a target and information related to the curvature radius of the driving lane DL. The predetermined distance D may be, for example, approximately 3.4 m when the curvature radius is 400 m, the predetermined distance D may be, for example, approximately 4.9 m when the curvature radius is 200 m, and the predetermined distance D may be, for example, approximately 8.2 m when the curvature radius is 100 m. Furthermore, an angle formed by the traveling direction of the own vehicle 100 and each of the directions from the own vehicle 100 toward the boundary lines BR and BL in a case where the curvature radius is 400 m may be, for example, approximately 8°, an angle formed in a case where the curvature radius is 200 m may be, for example, approximately 11°, and an angle formed in a case where the curvature radius is 100 m may be, for example, approximately 18°. Furthermore, as the curvature radius of the curved lane is larger, the predetermined distance D may be made smaller. Furthermore, the predetermined distance D with respect to a predetermined target located on a curving direction side of the curved lane for which the vertical line V serves as a reference, and on which the own vehicle 100 drives may be shorter or longer than the predetermined distance D with respect to the predetermined target located on the side opposite to the curving direction side of the curved lane.

Furthermore, in the above embodiment, the own vehicle 100 including the pair of vehicle headlights 1 including the control unit CO and the memory ME has been described as an example. However, at least one of the control unit CO and the memory ME may be shared by the pair of vehicle headlights 1. Furthermore, the signal output from the target detection device 140 may be input to the control unit CO without the ECU 130. Furthermore, the number of the own vehicles provided with the vehicle headlights 1, the number of the vehicle headlights 1 provided to the own vehicle, and the like are not particularly limited.

According to the present invention, the vehicle headlight that can improve the visibility in front while suppressing glare from being given is provided, and can be used in fields of cars and the like.

## Claims

1. A vehicle headlight comprising:
a lighting unit (10) that can change a light distribution pattern of light to be emitted; and
a control unit (CO) that receives input of a signal from a target detection device (140) that detects a predetermined target located in front of an own vehicle (100) and controls the lighting unit (10), wherein
the control unit (CO) is adapted to form in the light distribution pattern a first region (51a, b) that overlaps at least part of the predetermined target and whose light amount has been reduced, and lateral blurred regions (53a, b) that lie along at least part of left and right edges of the first region (51a, b) and whose light amounts have been reduced,
luminances of the lateral blurred regions (53a, b) are higher than a luminance of the first region (51a, b), and increase from a side of the first region (51a, b) toward a side of the respective blurred region (53a, b) opposite to the first region (51a, b), and
widths of the lateral blurred regions (53a, b) located in a center region (CA) in which a distance from a vertical line (V) passing a center in a left-right direction of the own vehicle (100) is less than a predetermined distance (D) are narrower than widths of the lateral blurred regions (53a, b) located in an outer region (OA) in which the distance is the predetermined distance (D) or more,
**characterized in that**
the predetermined distance (D) at a time when the own vehicle (100) is driving on a curved lane is longer than the predetermined distance (D) at a time when the own vehicle (100) is driving on a straight lane.

2. The vehicle headlight according to claim 1, wherein all the lateral blurred regions (53a, b) located in the central region (CA) have same first predetermined width.

3. The vehicle headlight according to claim 1, wherein the widths of the lateral blurred regions (53a, b) located in the center region (CA) are zero.

4. The vehicle headlight according to claim 1, wherein the widths of the lateral blurred regions (53a, b) located in the center region (CA) are narrower as the distance is shorter.

5. The vehicle headlight according to claim 1, wherein all the lateral blurred regions (53a, b) located in the outer region (OA) have same second predetermined width.

6. The vehicle headlight according to claim 1, wherein the widths of the lateral blurred regions (53a, b) located in the outer region (OA) are wider as the distance is longer.

7. The vehicle headlight according to any one of claims 1 to 6, wherein the predetermined distance (D) at a time when the own vehicle (100) is driving on a curved lane is longer as the curvature radius of the curved lane is smaller.

## Patentansprüche

1. Scheinwerfer für Fahrzeuge, umfassend:
eine Beleuchtungseinheit (10), die ein Lichtverteilungsmuster von zu emittierendem Licht ändern kann; und
eine Steuereinheit (CO), die den Eingang eines Signals von einer Zielerfassungsvorrichtung (140) empfängt, die ein vorbestimmtes Ziel erfasst, das sich vor einem eigenen Fahrzeug (100) befindet, und die Beleuchtungseinheit (10) steuert, wobei
die Steuereinheit (CO) angepasst ist, um einen ersten Bereich (51a, b) in dem Lichtverteilungsmuster auszubilden, der zumindest einen Teil des vorbestimmten Ziels überlappt und dessen Lichtmenge reduziert worden ist, und seitliche Unschärfebereiche (53a, b), die entlang zumindest eines Teils der linken und rechten Kanten des ersten Bereichs (51a, b) liegen und deren Lichtmengen reduziert worden sind,
Leuchtdichten der seitlichen Unschärfebereiche (53a, b) höher sind als eine Leuchtdichte des ersten Bereichs (51a, b), und von einer Seite des ersten Bereichs (51a, b) zu einer Seite des jeweiligen Unschärfebereichs (53a, b) gegenüber dem ersten Bereich (51a, b) ansteigen, und
Breiten der seitlichen Unschärfebereiche (53a, b), die in einem Zentralbereich (CA) angeordnet sind, in dem eine Distanz von einer vertikalen Linie (V), die durch ein Zentrum in der Links-Rechts-Richtung des eigenen Fahrzeugs (100) verläuft, kleiner ist als eine vorgegebene Distanz (D), schmaler sind als Breiten der seitlichen Unschärfebereiche (53a, b), die in einem Außenbereich (OA) angeordnet sind, in dem die Distanz die vorgegebene Distanz (D) oder mehr ist,
**dadurch gekennzeichnet, dass**
die vorgegebene Distanz (D) zu einem Zeitpunkt, zu dem das eigene Fahrzeug (100) auf einer kurvigen Fahrspur fährt, länger ist als die vorgegebene Distanz (D) zu einem Zeitpunkt, zu dem das eigene Fahrzeug (100) auf einer geraden Fahrspur fährt.

2. Scheinwerfer für Fahrzeuge nach Anspruch 1, wobei alle seitlichen Unschärfebereiche (53a, b), die im Zentralbereich (CA) angeordnet sind, dieselbe erste vorbestimmte Breite aufweisen.

3. Scheinwerfer für Fahrzeuge nach Anspruch 1, wobei die Breiten der seitlichen Unschärfebereiche (53a, b), die im Zentralbereich (CA) angeordnet sind, null sind.

4. Scheinwerfer für Fahrzeuge nach Anspruch 1, wobei die Breiten der seitlichen Unschärfebereiche (53a, b), die im Zentralbereich (CA) angeordnet sind, umso schmaler sind, je kürzer die Distanz ist.

5. Scheinwerfer für Fahrzeuge nach Anspruch 1, wobei alle seitlichen Unschärfebereiche (53a, b), die im Außenbereich (OA) angeordnet sind, dieselbe zweite vorbestimmte Breite aufweisen.

6. Scheinwerfer für Fahrzeuge nach Anspruch 1, wobei die Breiten der seitlichen Unschärfebereiche (53a, b), die im Außenbereich (OA) angeordnet sind, umso breiter sind, je länger die Distanz ist.

7. Scheinwerfer für Fahrzeuge nach einem der Ansprüche 1 bis 6, wobei die vorgegebene Distanz (D) zu einem Zeitpunkt, zu dem das eigene Fahrzeug (100) auf einer kurvigen Fahrspur fährt, umso länger ist, je kleiner der Kurvenradius der kurvigen Fahrspur ist.

## Revendications

1. Feu avant de véhicule comprenant :
une unité d'éclairage (10) qui peut changer un schéma de distribution lumineuse de la lumière à émettre ; et
une unité de commande (CO) qui reçoit en entrée un signal depuis un dispositif de détection de cible (140) qui détecte une cible prédéterminée située devant un véhicule hôte (100) et commande l'unité d'éclairage (10), dans lequel
l'unité de commande (CO) est adaptée pour former dans le schéma de distribution lumineuse une première région (51a, b) qui recouvre au moins une partie de la cible prédéterminée et dont la quantité de lumière a été réduite, et des régions floues latérales (53a, b) qui se situent le long d'au moins une partie des bords gauche et droit de la première région (51a, b) et dont les quantités de lumière ont été réduites,
des luminances des régions floues latérales (53a, b) sont supérieures à une luminance de la première région (51a, b), et augmentent depuis un côté de la première région (51a, b) vers un côté de la région floue (53a, b) respective opposée à la première région (51a, b), et
des largeurs des régions floues latérales (53a, b) situées dans une région centrale (CA) dans laquelle une distance par rapport à une ligne verticale (V) passant par le centre dans une direction gauche-droite du véhicule hôte (100) est inférieure à une distance prédéterminée (D) sont plus étroites que des largeurs des régions floues latérales (53a, b) situées dans une région externe (OA) dans laquelle la distance est la distance prédéterminée (D) ou plus,
**caractérisé en ce que**
la distance prédéterminée (D) à un moment où le véhicule hôte (100) roule sur une voie en courbe est plus longue que la distance prédéterminée (D) à un moment où le véhicule hôte (100) roule sur une voie rectiligne.

2. Feu avant de véhicule selon la revendication 1, dans lequel toutes les régions floues latérales (53a, b) situées dans la région centrale (CA) présentent une même première largeur prédéterminée.

3. Feu avant de véhicule selon la revendication 1, dans lequel les largeurs des régions floues latérales (53a, b) situées dans la région centrale (CA) sont égales à zéro.

4. Feu avant de véhicule selon la revendication 1, dans lequel les largeurs des régions floues latérales (53a, b) situées dans la région centrale (CA) sont d'autant plus étroites que la distance est plus courte.

5. Feu avant de véhicule selon la revendication 1, dans lequel toutes les régions floues latérales (53a, b) situées dans la région externe (OA) présentent une même deuxième largeur prédéterminée.

6. Feu avant de véhicule selon la revendication 1, dans lequel les largeurs des régions floues latérales (53a, b) situées dans la région externe (OA) sont d'autant plus larges que la distance est plus longue.

7. Feu avant de véhicule selon l'une quelconque des revendications 1 à 6, dans lequel la distance prédéterminée (D) à un moment où le véhicule hôte (100) roule sur une voie en courbe est d'autant plus longue que le rayon de courbure de la voie en courbe est plus petit.
